**Europäisches Patentamt**

**European Patent Office**

**Office européen des brevets**

(11) Numéro de publication : **0 417 452 B1**

# (12) FASCICULE DE BREVET EUROPEEN

(45) Date de publication du fascicule du brevet :
**07.10.92 Bulletin 92/41**

(51) Int. Cl.⁵ : **E01B 31/17, E01B 35/06**

(21) Numéro de dépôt : **90114679.5**

(22) Date de dépôt : **31.07.90**

(54) **Procédé de programmation du travail de reprofilage des rails d'une voie ferrée et/ou de reprofilage de ces rails, ainsi qu'un dispositif pour la mise en oeuvre de ce procédé.**

(30) Priorité : **28.08.89 CH 3115/89**

(43) Date de publication de la demande :
**20.03.91 Bulletin 91/12**

(45) Mention de la délivrance du brevet :
**07.10.92 Bulletin 92/41**

(84) Etats contractants désignés :
**AT BE CH DE DK ES FR GB GR IT LI LU NL SE**

(56) Documents cités :
**CH-A- 675 440**
**FR-A- 2 341 701**
**US-A- 4 584 798**

(56) Documents cités :
**RAIL INTERNATIONAL, vol. 18, no. 7, juillet 1987, pages 3-10, Bruxelles, BE; C. ESVELD: "A high recording system for railirregularities"**

(73) Titulaire : **SPENO INTERNATIONAL S.A.**
**Case Postale 16 22-24, Parc Château-Banquet**
**CH-1211 Genève 21 (CH)**

(72) Inventeur : **Panetti, Romolo**
**24, Parc Château-Banquet**
**CH-1202 Genève (CH)**

(74) Mandataire : **Micheli & Cie**
**Rue de Genève 122, Case Postale 61**
**CH-1226 Genève-Thonex (CH)**

EP 0 417 452 B1

## Description

L'utilisation des convois ferroviaires modernes à grande vitesse nécéssite des voies et des rails de meilleure qualité, c'est-à-dire avec le moins de défaut possible, ce qui entraîne une vérification et un reprofilage des rails d'une voie ferrée de plus en plus fréquents. Par ailleurs, cette vérification et ce reprofilage des rails d'une voie ferrée sont toujours plus difficiles à effectuer du fait de l'augmentation de la fréquence des convois et par conséquent du taux d'occupation de la voie qui devient toujours plus élevé.

Il devient de ce fait impératif de pouvoir programmer à l'avance avec une précision suffisante le reprofilage des rails d'une voie et connaître notamment le temps nécessaire à un tel reprofilage. Il est évidemment souhaitable que les données utilisées pour cette programmation du travail de reprofilage puissent être également utilisées pour la commande d'un véhicule de reprofilage des rails d'une voie ferrée afin d'optimaliser ces opérations et d'éviter toute opération ou travail inutile ou effectué à double.

La présente invention a pour but l'élaboration d'un procédé de programmation du travail de reprofilage des rails d'une voie ferrée et/ou de reprofilage de ces rails qui soit simple, précis, entièrement automatique et donc rapide. L'invention a également pour but la réalisation d'un dispositif pour la mise en oeuvre de ce procédé.

Le procédé objet de la présente invention est défini par les caractéristiques de la revendication 1.

Le dessin annexé illustre schématiquement et à titre d'exemple les différentes étapes ou opérations de ce procédé ainsi qu'une machine de reprofilage pour sa mise en oeuvre.

La figure 1 illustre différents types a, b, c, d et e d'usure du champignon d'un rail d'une voie ferrée.

La figure 2 illustre schématiquement pour chaque type d'usure a, b, c, d et e du champignon d'un rail la quantité et la position du métal à enlever définissant la catégorie d'usure du rail et une distribution schématique des outils de reprofilage qu'il y a lieu d'utiliser.

La figure 3a illustre sous forme de diagramme ou de schéma bloc les différentes opérations du procédé selon l'invention et leur succession.

La figure 3b illustre une partie du schéma de la figure 3a pour une variante du procédé.

La figure 4 illustre un mode d'affichage des différents paramètres nécessaires à la programmation et à la commande du reprofilage d'un tronçon de voie ferrée.

La figure 5 illustre en élévation de côté un véhicule de reprofilage.

Les figures 6 à 8 illustrent des détails du véhicule illustré à la figure 5.

La figure 9 illustre un détail d'un dispositif de mesure.

La figure 10 est un schéma représentatif du dispositif de commande des unités de meulage d'un véhicule de reprofilage.

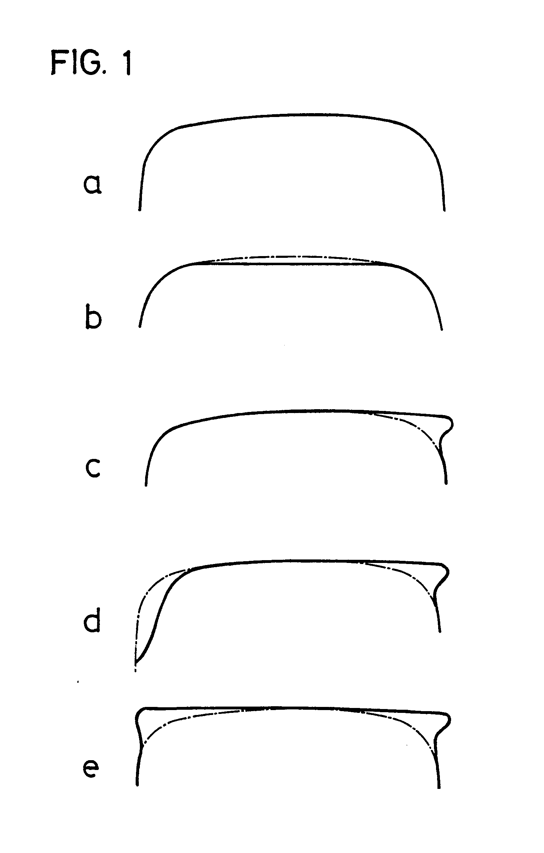

L'expérience montre que les déformations du profil transversal du champignon des rails d'une voie ferrée prennent, suivant le genre de trafic et le tonnage des convois qui y circulent, des types d'usure caractéristiques qu'il est possible de classifier comme illustré à la figure 1.

La forme du profil transversal illustré en a correspond à un premier type d'usure relatif à un rail normal peu ou pratiquement pas usé.

La forme du profil transversal illustré en b correspond à un second type d'usure relatif à un rail aplati dont les congés sont encore bons.

La forme du profil transversal illustré en c correspond à un troisième type d'usure relatif à un rail présentant une bavure extérieure marquée.

La forme du profil transversal illustré en d correspond à un quatrième type d'usure relatif à un rail présentant une bavure extérieure et un chanfrein intérieur.

La forme du profil transversal illustré en e correspond à un cinquième type d'usure relatif à un rail plat présentant des bavures extérieure et intérieure.

La pratique montre que tous les rails usés par la circulation de convois ferroviaires peuvent être classés dans l'un ou l'autre de ces types caractéristiques d'usure.

Par ailleurs connaissant pour chaque voie ferrée le type de rails posé et la nature du trafic ferroviaire, convois à grande vitesse ou au contraire convois de marchandises à fortes charges, on connaît par expérience quel est le profil transversal optimum du champignon du rail pour garantir la meilleure utilisation de la vole. Ce profil optimal n'est pas forcément le profil transversal d'origine du champignon des rails mais peut être un profil moyen d'usure réalisant un optimum entre les conditions de roulement des convois et les conditions ou fréquences de reprofilage des rails.

Ainsi d'une façon générale on peut pour chaque voie ferrée, ou tronçon de voie ferrée, définir expérimentalement et empiriquement un profil de référence que les opérations de rectifiage ou de reprofilage des rails ont pour but de restaurer ou de créer lors de la pose de rails neufs cela particulièrement sur les voies à trafic à grande vitesse.

En comparant le profil de référence transversal du champignon d'un rail d'un tronçon de voie au type de

EP 0 417 452 B1

profil déformé, on détermine quelles sont les zones du champignon du rail qui doivent être reprofilées, soit là où il y a excès de métal, ainsi que l'importance de ces zones soit la quantité de métal à enlever.

A partir de cette comparaison du profil de référence avec le type d'usure d'un rail l'expérience et la pratique ont permis de déterminer des catégories de reprofilage. Chacune de ces catégories de reprofilage correspond à une configuration standard des outils de reprofilage c'est-à-dire à une distribution particulière de ceux-ci autour du champignon du rail et à une puissance ou force d'appui contre le rail de chaque outil. Ces configurations standard des outils dépendent bien entendu également du nombre d'outils par file de rails que la machine ou véhicule de rectification en voie utilisé possède et des caractéristiques de ces outils.

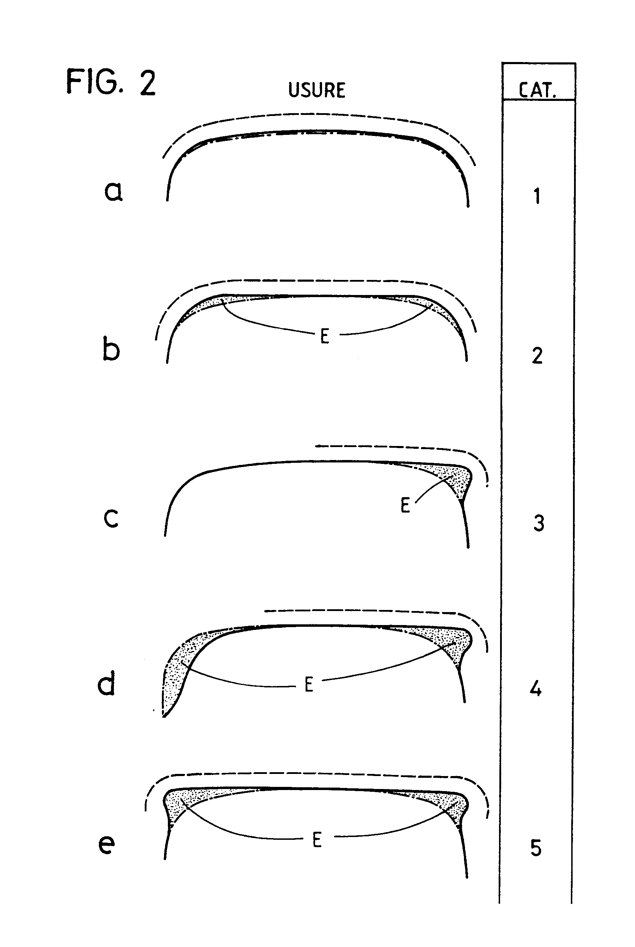

La figure 2 indique, par la comparaison des types d'usure représentés à la figure 1 avec un profil de référence choisi, la catégorie de reprofilage à laquelle on est confronté dans un cas particulier, et en traitillés la distribution des outils autour du champignon du rail.

– En a la comparaison du profil de référence avec un rail usé suivant le premier type (figure 1a) détermine une première catégorie de reprofilage pour laquelle les outils de la machine de reprofilage seront distribués régulièrement autour du profil du champignon du rail avec une pression d'appui contre le rail réduite et assez régulière.

– En b la comparaison du profil de référence avec un rail usé suivant le second type d'usure (figure 1b) détermine une seconde catégorie de reprofilage pour laquelle les outils sont concentrés sur les congés extérieur et intérieur avec une pression d'appui déterminée par l'ampleur de l'excès E de métal à enlever.

– En c la comparaison du profil de référence avec un rail usé suivant le troisième type d'usure (figure 1c) détermine une troisième catégorie de reprofilage pour laquelle les outils sont concentrés sur la partie extérieure de la table de roulement et sur le congé extérieur du rail, avec une pression d'appui nettement plus forte sur les outils affectés au congé extérieur.

– En d la comparaison du profil de référence avec un rail usé suivant le quatrième type d'usure (figure 1d) détermine une quatrième catégorie de reprofilage pour laquelle les outils sont concentrés sur la table de roulement et sur le congé extérieur du rail avec une pression d'appui plus forte sur les outils affectés au congé extérieur.

– En e la comparaison du profil de référence avec un rail usé suivant le cinquième type d'usure (figure 1e) détermine une cinquième catégorie de reprofilage pour laquelle les outils sont concentrés sur les congés extérieur et intérieur avec des pressions d'appui importantes.

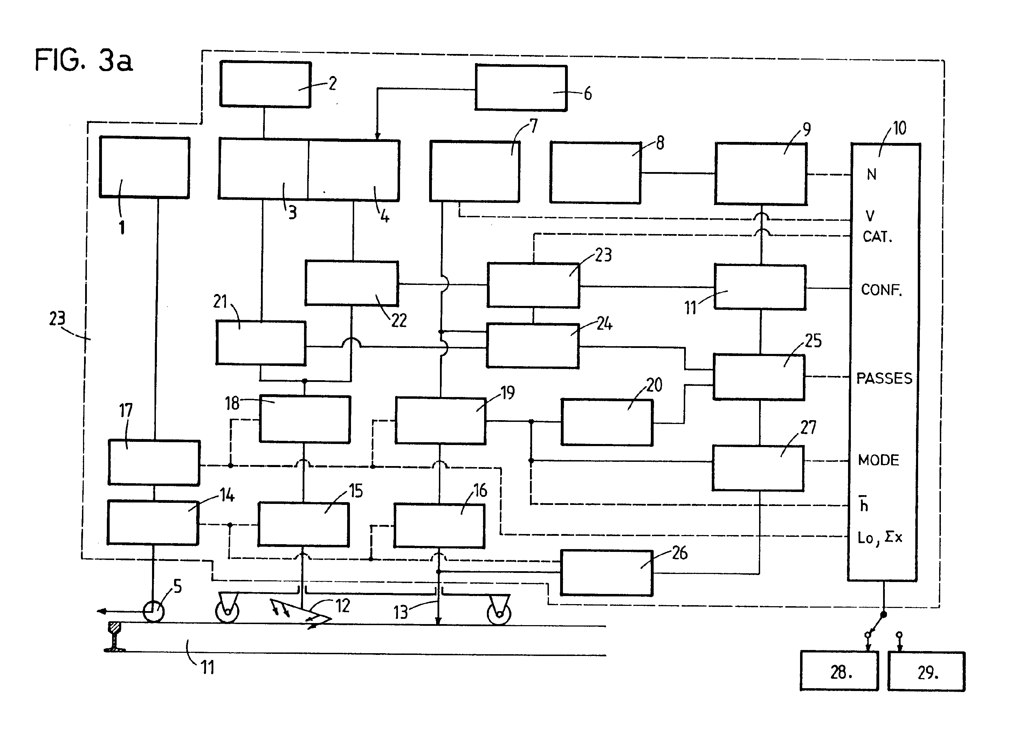

A partir des éléments ainsi développés et déterminés par l'expérience on peut décrire le procédé original de programmation des travaux de profilage ou de reprofilage des rails d'une voie ferrée et/ou d'exécution de ce profilage ou reprofilage, description qui pour faciliter la compréhension sera effectuée en relation avec le diagramme de la figure 3a.

Suivant la configuration de la voie dont le reprofilage doit être programmé ou effectué, celle-ci est divisée en tronçons unitaires de longueur Lo. Cette longueur de référence Lo. est mémorisée en 1.

Les différents profils de référence pouvant être utilisés sont mémorisés en 2 sous forme de matrice par exemple. On sélectionne parmi les profils de référence enregistrés en 2, en fonction de la voie ou du tronçon de voie à reprofiler, le profil de référence préféré devant être utilisé et on le mémorise en 3. On mémorise en 6, sous forme de matrice par exemple, tous les différents types d'usure, par exemple ceux définis précédemment (figure 1), pour chaque profil de référence. On sélectionne parmi ces types d'usure ceux correspondant au profil de référence préféré et les mémorise en 4.

Un codeur 5, monté sur une roue de la machine de reprofilage, délivre des signaux correspondant à la position de cette machine sur la voie, ou point kilométrique où elle se trouve.

Pour programmer ou commander le travail de reprofilage on détermine, en fonction de la longueur de la ligne à traiter et du temps à disposition, la vitesse la plus appropriée pour chaque tronçon Lo de voie; ces vitesses relatives à chaque tronçon Lo sont mémorisées en 7.

On connaît également le type de machine qui sera utilisé pour le profilage ou le reprofilage d'une voie donnée et cette indication, incluant notamment le nombre et le type d'outils de reprofilage ainsi que leurs caractéristiques que cette machine compte par file de rails est stockée en 8.

On mémorise en 9 toutes les configurations d'outils, leurs distributions autour du champignon du rail et leurs caractéristiques, pour tous les types de machine de reprofilage mémorisés en 8.

Le type de machine qui sera utilisé pour le reprofilage étant défini on affiche et mémorise en 10 le nombre d'outils N et on sélectionne les configurations standard d'outils propres à cette machine qui peuvent être utilisées pour le reprofilage et/ou être mémorisées en 11.

On dispose encore de deux informations supplémentaires, soit de par des mesures faites au préalable sur la voie à reprofiler, soit par des mesures faites en temps réel par la machine de programmation ou de reprofilage. il s'agit d'une part de la mesure du profil transversal du champignon du rail en 12 et d'autre part de la mesure de la profondeur et de la longueur d'ondes des ondulations de la table de roulement du rail dans le

3

sens longitudinal en 13. A titre d'exemple, on peut indiquer que la mesure du profil transversal peut se faire comme décrit dans le brevet EP 0 114284 et que la mesure des ondulations peut se faire de la façon décrite dans le brevet EP 0 044885.

En ce qui concerne la prise de profil du champignon du rail ainsi que de l'amplitude des ondulations longitudinales du rail, il est souvent préférable de procéder par échantillonnage. On détermine en 14 la distance X entre deux échantillons désirés et mémorise ces échantillons de profil P et d'amplitude d'ondulation h en 15 et 16 respectivement.

A la fin de chaque tronçon de voie $\Sigma$ x = Lo on provoque par 17 le déclenchement de la calculation en 18 du profil moyen P sur Lo, soit $\overline{P}$ et en 19 de l'ondulation moyenne h sur Lo, soit $\overline{h}$.

On peut choisir de calculer la moyenne de différentes façons, par exemple la moyenne arithmétique ou quadratique.

Pour la détermination du profil moyen $\overline{P}$ on dispose de plusieurs façons de procéder. On peut par exemple prendre la moyenne de tous les profils mesurés sur Lo, $\overline{P} = \dfrac{X}{Lo} \Sigma$ profils, ou prendre la moyenne des (n-2) profils les plus rapprochés du profil de référence en supprimant les deux profils les plus éloignés, de façon à ne pas fausser la moyenne par des valeurs extrêmes.

A l'aide de l'amplitude moyenne $\overline{h}$ des ondulations longitudinales du rail et de la vitesse de déplacement présélectionnée on détermine, en fonction de tables déterminées par l'expérience et mémorise en 20 le nombre de passes nécessaires à l'élimination de cette déformation ondulatoire du rail.

Le profil moyen $\overline{P}$ pour chaque tronçon de voie Lo est mémorisé sous forme de matrice par exemple et comparé en 21 au profil de référence préféré ou choisi pour ce tronçon de voie ce qui permet de déterminer l'excès de métal E à enlever pour reprofiler le rail.

Pour définir la catégorie de reprofilage on compare séquentiellement en 22 les différents types d'usure i = 1 à 5 avec le profil moyen $\overline{P}$ soit ($\overline{P}$- type i) = Vi. La comparaison donnant le minimum de Vi détermine la catégorie de reprofilage pour le tronçon de voie envisagé et celle-ci est mémorisée en 23.

On pourrait également faire la comparaison des types d'usure avec chacun des profils P pris tous les "X" mètres et déterminer pour chacun de ces profils la catégorie de reprofilage. Le numéro de catégorie de reprofilage le plus fréquent sur le tronçon "Lo" serait alors considéré comme celui de la catégorie de reprofilage représentative du tronçon "Lo".

D'autre part à l'aide de tables déterminées expérimentalement et mémorisées en 24, on définit à partir de l'excès de métal E, de la vitesse de travail présélectionnée V et de la catégorie de reprofilage CAT, le nombre de passes nécessaires pour la rectification du profil transversal du rail. Ce nombre de passes pour éliminer les défauts du profil transversal est ajouté en 25 au nombre de passes nécessaires pour éliminer les défauts ondulatoires du tronçon Lo de la voie et on obtient ainsi le nombre total de passes nécessaires pour reprofiler le rail, nombre de passes total qui est également affiché et mémorisé en 10.

La connaissance de la catégorie de reprofilage et du nombre total de passes permet de sélectionner en 11 la configuration optimale des outils, en position et puissance, qui convient le mieux pour une machine donnée au reprofilage du type d'usure affectant le tronçon de voie Lo. Cette configuration CONF d'outils est affichée et mémorisée en 10.

La longueur d'ondes des ondulations longitudinales est déterminée en 26. Connaissant cette longueur d'ondes, le nombre de passes total et l'amplitude moyenne $\overline{h}$ de ces ondulations on détermine en fonction des données expérimentales mémorisées en 27 le mode de meulage, léger ou agressif; libre ou bloqué et ce mode de meulage est également affiché et mémorisé en 10.

Pour les ondes courtes (3 à 30 cm) de faible amplitude par ex. $\overline{h} \leq 0,15$ mm le mode de meulage sera léger; pour des valeurs de $\overline{h} \geq 0,15$, le mode sera agressif. Pour les ondes longues (de 0,3 à 3 m) et d'amplitude $\geq 0,5$ mm par ex., les unités de meulage seront bloquées pour allonger la base de référence rectiligne de reprofilage, pour des amplitudes $\leq 0,5$ mm, ces unités seront libres. Les différents seuils provoquant le changement de mode sont fixés en 27. Les seuils définissant les changements de mode peuvent être choisis par l'opérateur et introduits en 27. Le mode de meulage déterminé est affiché et mémorisé en 10.

Pour chaque tronçon de voie Lo on peut à l'aide des données affichées et mémorisées en 10 enregistrer les paramètres nécessaires à la commande d'une machine de reprofilage et les mémoriser en 28 pour un reprofilage à effectuer ultérieurement. On peut également utiliser les données affichées et mémorisées en 10 directement pour la commande d'un dispositif de reprofilage 29. Enfin, un troisième mode opératoire serait d'utiliser les données affichées en 10 pour programmer manuellement par un opérateur une machine de reprofilage.

Ainsi selon le procédé décrit la connaissance pour chaque tronçon d'une voie Lo de chemin de fer, du type de machine de reprofilage, de sa vitesse de travail V, du profil moyen $\overline{P}$, de l'excès de métal E, de l'amplitude moyenne $\overline{h}$ et de la longueur des ondulations de chaque file de rails, permet de définir pour chacun de ces tronçons de voie :
- Le nombre total de passes à effectuer.
- La configuration des outils de reprofilage, c'est-à-dire tant leur distribution autour du champignon de chaque file de rails que leur puissance ou pression d'appui contre le rail.
- Le mode de meulage à utiliser.

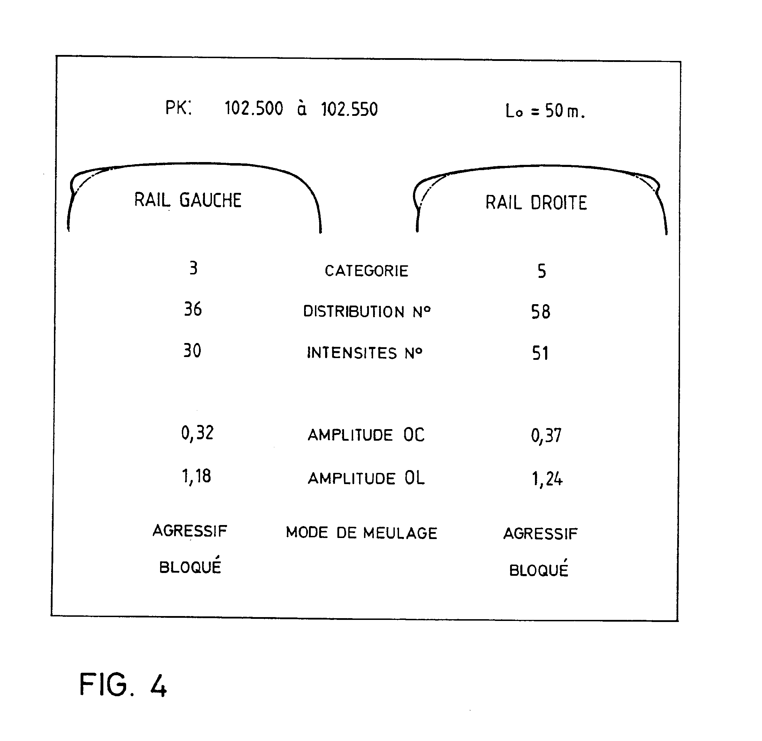

Ces paramètres qui définissent de façon univoque le reprofilage des rails d'une voie de chemin de fer peuvent être enregistrés successivement pour chaque tronçon Lo de voie en fonction de l'abcisse curviligne de la voie sur un support approprié, de préférence magnétique ou optique, ils peuvent être affichés par exemple de la manière illustrée à la figure 4, ou utilisés pour la commande directe d'une machine de reprofilage manuellement ou automatiquement.

Ainsi, pour chaque tronçon de voie d'une longueur de 50 m par exemple, on visualise immédiatement la position kilométrique du tronçon de voie, et pour chaque file de rails sous forme graphique la comparaison du profil de référence préféré avec le profil du rail usé, et sous forme numérique la catégorie de reprofilage, la configuration en position des unités de meulage, la configuration en puissance des unités de meulage, l'amplitude des ondes longitudinales ainsi que les modes de meulage.

D'autres paramètres tels le nombre d'outils, la vitesse de travail de la machine, le mode de rectifiage, le point kilométrique, le numéro du tronçon, la hauteur moyenne ainsi que la longueur d'ondes des ondulations longitudinales peuvent également être enregistrés à partir des données affichées et mémorisées en 10 et servent principalement d'informations pour l'opérateur.

Pour mieux faire ressortir la simplicité d'application du procédé selon la présente invention on va donner ci-après une présentation possible d'un enregistrement correspondant à des tronçons de voie déterminés et en expliquer brièvement l'utilisation.

| Ligne : GENEVE-LAUSANNE   Voie : 2   Rail : UIC 60-90 A   Date : | | | | | | | | | | | | | |
|---|---|---|---|---|---|---|---|---|---|---|---|---|---|
| Machine : RPS-32 / 16 outils/file - Outil No 602-ac 90 A  /   temps à disposition : 2h | | | | | | | | | | | | | |
| Point Kilomètre | Vitesse km/h | Passes-Machine | Rail Gauche | | | | | Rail Droite | | | | | |
| | | | Catégorie | Ondul. moy. | Distrib. outils | Puissance outils | | | | | | | |
| P.K. | V | P.M. | CAT | Y | DIST. | Puis. | Mode | CAT | Y | DIST. | PUIS. | Mode | Lo |
| 35.500 | 5 | 2 | 3 | 0,3 | 425 | 412 | A | 4 | 0,25 | 420 | 415 | A | 100 |
| 35.600 | 5 | 2 | 4 | 0,3 | 318 | 309 | A | 2 | 0,35 | 230 | 225 | A | 100 |
| 1 | 2 | 3 | 4 | 5 | 6 | 7 | 8 | 9 | 10 | 11 | 12 | 13 | 14 |

Ce relevé fait ressortir :
- Les données propres à la voie, soit :
    - l'occupation de la voie, d'où le temps disponible pour le reprofilage des rails.
    - le type de rails posé et la nuance d'acier de ceux-ci.
    - le tronçon Lo de voie considéré dont on connaît le tracé et les caractéristiques propres.
    - le profil de référence à utiliser ainsi que les différents types d'usure qui lui sont associés.
- Les données propres à la machine de reprofilage, soit :
    - le type de machine affecté au travail de reprofilage.
    - le nombre d'outils par files de rails.
    - les types d'outils de la machine avec leurs caractéristiques, notamment de puissance et d'enlèvement de métal pour la nuance d'acier en question
    - les configurations standard d'outils possibles pour cette machine et pour les différentes catégories de meulage.

– Les données propres au reprofilage, dépendantes de l'état géométrique des rails à reprofiler :

– la vitesse d'avancement optimale.

– le nombre total de passes nécessaires.

– la catégorie représentative de reprofilage.

– l'amplitude moyenne des ondulations longitudinales ainsi qu'éventuellement comme on le verra plus loin, la longueur d'ondes courtes ou longues.

– la distribution des outils autour du champignon du rail.

– la puissance de chaque outil ou sa force d'appui contre le rail.

– les modes de reprofilage.

Les colonnes 1, 2, 3 et 14 du diagramme donné ci-dessus permettent à elles seules la programmation générale du reprofilage de la voie et sa mémorisation sur un support approprié, notamment en fonction de l'occupation de celle-ci. Ce travail peut être effectué par un département ou bureau spécialisé préalablement au reprofilage qui est lui effectué au meilleur moment en fonction de l'utilisation de la voie.

Les colonnes 4, 5 et 9, 10 de ce diagramme sont informatives pour l'opérateur et lui permettent une fois le travail de reprofilage effectué d'en contrôler la qualité.

Enfin les colonnes 2, 6, 7, 8 et 11, 12, 13 du diagramme contiennent les informations nécessaires à la programmation du travail de reprofilage proprement dit et à la commande de la machine de reprofilage. Comme on l'a vu précédemment ces données peuvent être utilisées en direct pour la programmation automatique ou manuelle immédiate d'une machine à reprofiler, elles peuvent être également mémorisées et utilisées ultérieurement pour la programmation automatique ou manuelle de la machine à reprofiler.

Ce procédé de programmation du profilage ou du reprofilage des rails d'une voie ferrée et/ou de leur reprofilage immédiat ou différé est particulièrement intéressant car pour la première fois il permet l'utilisation simultanée des diverses techniques de pointe pour la mesure des profils des rails, pour leur reprofilage, notamment par des unités de meulage sophistiquées telles que décrites dans les brevets CH 633.336; CH 654.047; CH 666.068; CH 655.528 et CH 675.440 en combinaison avec le savoir-faire acquis par les équipes d'opérateurs au cours de nombreuses années de pratique sur quantité de réseaux ferroviaires de nombreux pays.

Ce procédé n'a été rendu possible que par l'observation, la mesure et l'enregistrement systématiques de tous les paramètres intervenant dans le reprofilage puis par la définition des règles régissant les divers paramètres entre eux et ensuite par la mémorisation sous forme de matrice directement utilisables des divers paramètres en question.

Il est devenu alors possible d'utiliser tout en faisant appel aux techniques de pointe toute l'expérience acquise par les meilleurs utilisateurs afin de disposer d'une commande entièrement automatique de la machine de reprofilage, commande plus rapide, plus précise et surtout évitant toute erreur humaine soit d'appréciation d'un cas précis, soit d'exécution qui est toujours possible.

Ce procédé automatique est d'une application des plus simples, conforme à la logique des opérateurs dont il découle, et permet de simplifier grandement les systèmes de calcul et de commande des machines de reprofilage par l'utilisation de configurations standard pré-établies et qu'il suffit de sélectionner. Il permet au choix la programmation du reprofilage en vue d'un travail ultérieur soit la commande directe du travail de reprofilage.

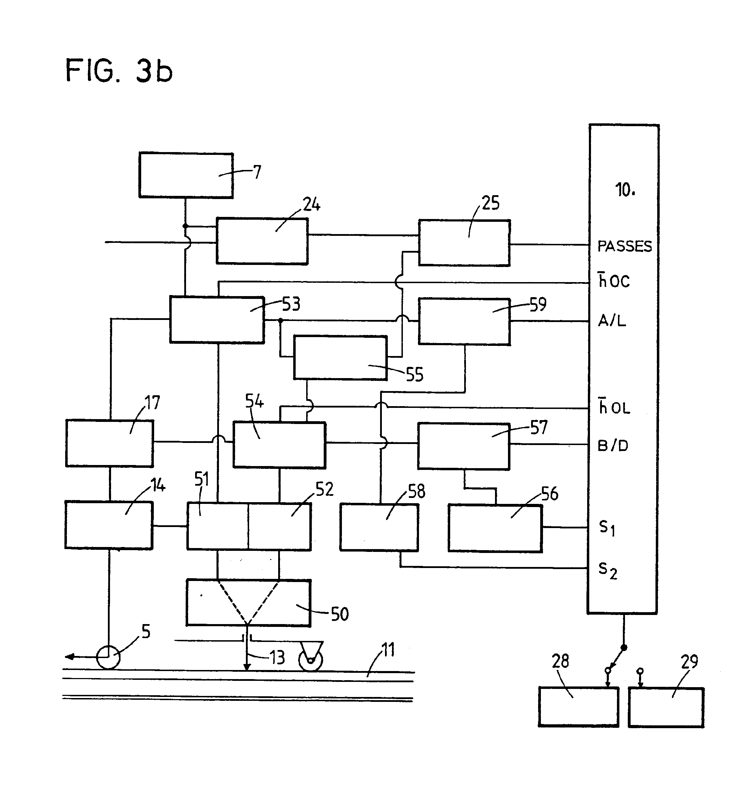

La figure 3b illustre sous forme de schéma partiel une partie de la figure 3a pour une variante du procédé dans laquelle on traite différemment les ondulations longitudinales du rail de grande longueur d'ondes OL de celles de petite longueur d'ondes OC. Ces ondes longues et courtes sont souvent superposées en voie d'où la nécessité de les traiter séparément ce qui conduit à la modification illustrée à la figure 3b du schéma de la figure 3a décrite précédemment. Les blocs ou fonctions de la figure 3b se retrouvant dans le schéma de la figure 3a portent les mêmes chiffres de référence pour la commodité de la compréhension.

Les palpeurs 13 d'amplitude des ondulations du rail 11 délivrent une information qui est subdivisée en 50 en signaux correspondant à des ondes courtes OC, 3 cm à 30 cm, par exemple et en signaux correspondant à des ondes longues OL, 30 cm à 3 m, par exemple. Un échantillonage, commandé par 14, est effectué tous les X mètres en 51, 52 pour les ondes courtes OC et longues OL respectivement. En 53 on calcule la moyenne de l'amplitude des ondes courtes OC sur le tronçon Lo tandis que ce calcul est effectué en 54 pour les ondes longues OL. La moyenne des amplitudes des ondes longues $\bar{h}$ OL et celle des ondes courtes $\bar{h}$ OC sur le tronçon Lo est affichée et mémorisée en 10.

Avec la moyenne $\bar{h}$ OC et la moyenne $\bar{h}$ OL, on détermine à l'aide de tables pré-enregistrées en 55 le nombre de passes nécessaires pour l'élimination des défauts ondulatoires du rail des deux types OL, OC, nombre qui est ajouté comme précédemment en 25 au nombre de passes nécessaires pour enlever les défauts du profil transversal ce qui détermine le nombre total de passes affiché et mémorisé en 10.

La valeur moyenne de l'amplitude des ondes longues $\bar{h}$ OL est comparée en 57 à un seuil S1 pré-enregistré en 56 ce qui détermine le mode de meulage bloqué ou libre suivant que $\bar{h}$ OL est supérieur ou inférieur au seuil S1. Ce mode bloqué B ou débloqué D est affiché et mémorisé en 10.

La comparaison de la valeur moyenne de l'amplitude des ondes courtes $\bar{h}$ OC avec un seuil pre-établi et mémorisé en 58, effectuée en 59, définit le mode de meulage agressif A ou léger L qui est affiché et mémorisé en 10. Le niveau des seuils S1 et S2 est également affiché et mémorisé en 10 pour la commodité de l'opérateur. Le reste du schéma illustré à la figure 3a reste le même mais avec cette variante on peut affiner le mode de meulage en quatre types, agressif ou léger, bloqué ou débloqué soit libre et non pas seulement agressif ou léger.

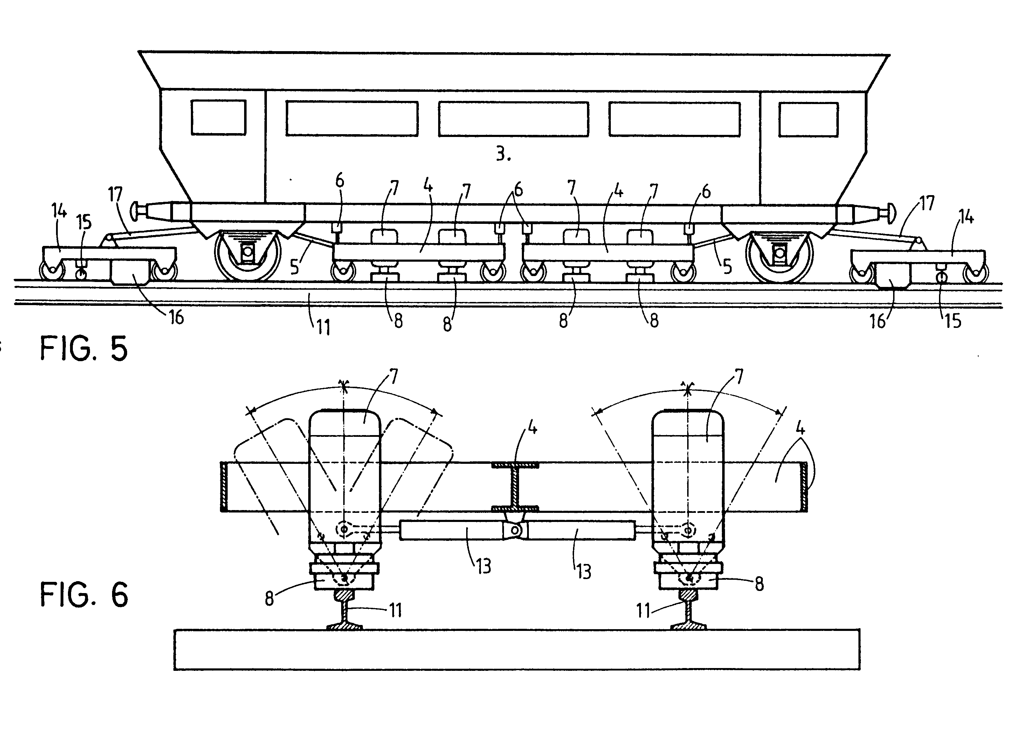

La figure 5 illustre, vue de côté, une machine pour la rectification des rails d'une voie ferrée formée d'un véhicule automoteur 3 muni de chariots de meulage 4. Ces chariots de meulage 4 sont pourvus de galets à boudin reposant, en position de travail, sur les rails de la voie et sont reliés au véhicule 3 d'une part par un timon de traction 5 et d'autre part par des vérins de levage 6. Ces vérins 6 permettent en plus de l'appui de ces chariots sur la voie le relevage du chariot pour la marche haut-le-pied à grande vitesse du véhicule 3 pour son déplacement d'un chantier de meulage à l'autre.

Chaque chariot de meulage 4 porte plusieurs unités de meulage par file de rails, chacune de ces unités de meulage comporte un moteur 7 qui entraîne une meule 8 en rotation.

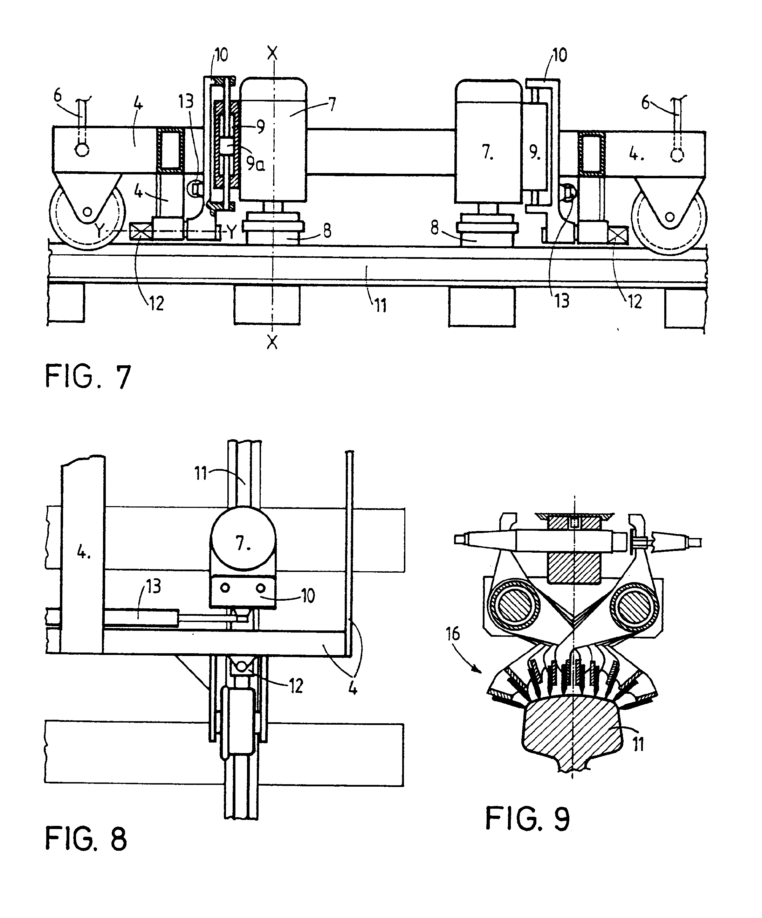

Comme on le voit particulièrement bien à la figure 7, chaque unité de meulage 7, 8 est déplaçable suivant son axe longitudinal X-X par rapport au chariot 4. En effet le moteur 7 porte la chambre 9 d'un vérin à double effet dont le piston 9a est solidaire d'une tige, traversant la chambre 9, solidaire d'un support 10. Ce support 10 est articulé sur le chariot 4 autour d'un axe Y-Y, parallèle à l'axe longitudinal du rail 11. La position angulaire des unités de meulage est déterminée et commandée par un capteur d'angle 12 solidaire du support 10 et un vérin à double effet 13 reliant ce support 10 au chariot 4.

De cette façon chaque unité de meulage est déplaçable angulairement autour d'un axe parallèle à l'axe longitudinal du rail qui lui est associé et perpendiculairement à cet axe longitudinal ce qui permet d'approcher et d'appliquer la meule 8 contre le rail 11 avec une force déterminée et de l'éloigner du rail.

Le véhicule 3 est encore équipé de deux chariots de mesure 14 roulant le long de chaque rail équipés d'un dispositif de mesure 15 des ondulations longitudinales de la surface du rail 11 et d'un dispositif de mesure du profil transversal 16 du champignon du rail. Les chariots 14 sont évidemment tractés par le véhicule 3 par exemple à l'aide d'un timon 17. Le dispositif de mesure du profil transversal des rails est illustré schématiquement à la figure 9 sous forme d'un ensemble de palpeurs mécaniques en contact avec des génératrices différentes du champignon du rail (voir brevet EP 0 114 284).

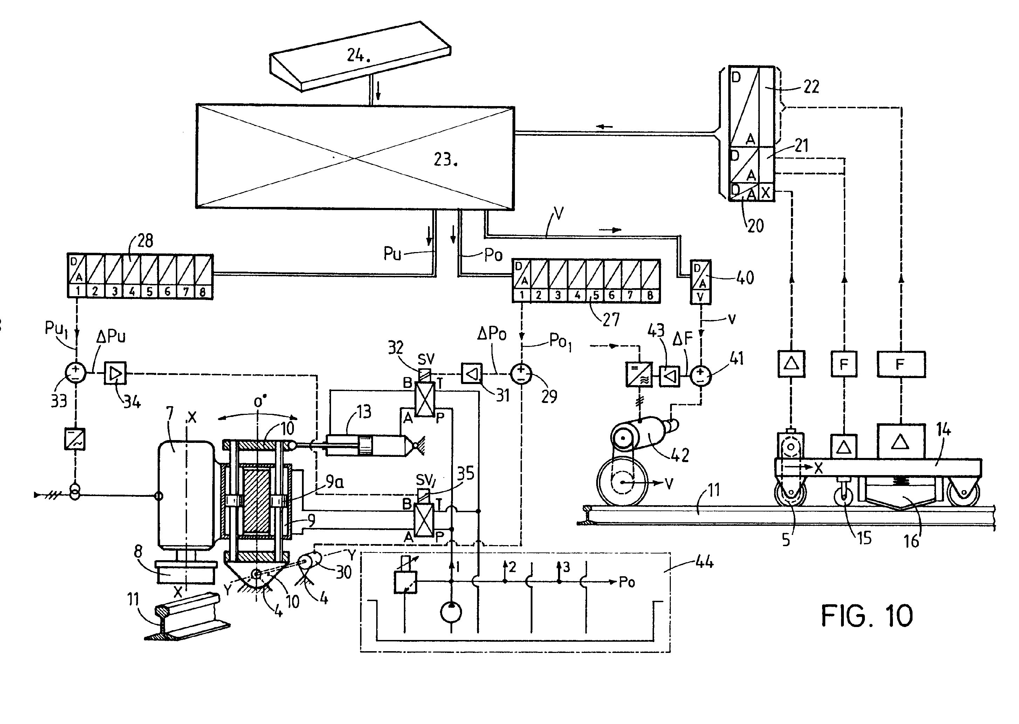

La machine décrite comporte encore (figure 10) un dispositif de traitement des données délivrées par les capteurs 5 de distance parcourue, 15 d'amplitude des ondulations longitudinales du rail et 16 du profil transversal du rail et de commande des unités de reprofilage 7, 8 tant en position qu'en puissance pour reprofiler le rail 11 de manière à lui redonner un profil longitudinal et un profil transversal identique ou proche du profil de référence qui lui est assigné.

Ce dispositif de traitement des signaux de mesure et de commande des unités de reprofilage est très schématiquement illustré à la figure 10. Il comporte pour chaque file de rails trois convertisseurs analogue-digital 20, 21, 22 associés respectivement aux capteurs 5, 15 et 16, transformant les signaux de mesures analogiques délivrés par ces capteurs en signaux digitaux qui sont délivrés à un micro-processeur 23.

Ce micro-processeur 23 reçoit encore des informations qui sont soit introduites manuellement par un clavier alpha-numérique 24 relatives par exemple au type de machine utilisé, au nombre d'unités de meulage par file de rails qu'elle comporte, et à la capacité d'enlèvement de métal des meules utilisées en fonction de la puissance des moteurs entraînant ces meules.

On introduit également par ce clavier alpha-numérique les données définissant les profils de référence ainsi que les types d'usure pour chacun de ces profils et la vitesse de reprofilage.

Le micro-processeur 23 détermine en fonction des données qui lui sont fournies et qui ont été énumérées plus haut pour chaque unité de reprofilage travaillant sur les deux files de rails un signal de commande digital de position Po et un signal de commande de puissance Pu ainsi qu'un signal de commande V de la vitesse de travail du véhicule.

Des convertisseurs digitaux-analogiques 27, 28 convertissent ces signaux de commande digitaux Pu, Po en signaux de commande analogiques pour chacune des unités de reprofilage 7, 8. Un convertisseur digital-analogique 40 convertit le signal de commande digital de la vitesse V en un signal de commande analogique.

La figure 10 illustre la boucle d'asservissement d'une unité de reprofilage, l'unité No 1, du rail 11 de la voie.

Le signal analogique de position $PO_1$ est comparé dans un comparateur 29 au signal de sortie d'un capteur d'angle 30 indiquant la position angulaire du support 10, et donc de l'unité de meulage autour de l'axe Y-Y parallèlement à l'axe longitudinal du rail. S'il n'y a pas égalité entre le signal $PO_1$ et celui délivré par le capteur

EP 0 417 452 B1

d'angle 30, le comparateur délivre un signal de correction de position Δpo, positif ou négatif, commandant par l'intermédiaire d'un amplificateur 31 une servo-valve 32 de commande du vérin à double effet 13 alimenté en fluide sous pression par le groupe hydraulique 44 assurant le positionnement angulaire de l'unité de meulage 7, 8.

Le signal analogique de puissance $Pu_1$ est comparé à l'aide du comparateur 33 à un signal proportionnel à la puissance instantanée du moteur 7 et, en cas d'inégalité de ces signaux, le comparateur 33 délivre un signal de correction de puissance ΔPu commandant, par l'intermédiaire d'un amplificateur 34 une servo-valve 35 de commande du vérin à double effet 9, 9a modifiant la pression d'application de la meule 8 contre le rail 11.

Le signal analogique de vitesse V délivré par le convertisseur digital-analogique 40 alimenté par le micro-processeur 23 est comparé à l'aide d'un comparateur 41 à un signal proportionnel à la vitesse du moteur 42 de traction du véhicule 3 et en cas d'inégalité de ces signaux, le comparateur 41 délivre un signal de correction ΔF commandant par l'intermédiaire d'un amplificateur 43 la fréquence d'alimentation électrique du moteur de traction 42.

Ainsi, la machine décrite pour la mise en oeuvre du procédé de reprofilage comporte pour chaque file de rails des moyens de mesure du profil transversal au moins du rail mais généralement également de la distance parcourue et du profil longitudinal du rail, des ondulations de grande ou de petite longueur d'ondes; des moyens de comparaison des types d'usure déduits de ces profils mesurés à un profil de référence sélectionné permettant d'établir une catégorie de reprofilage qui détermine une configuration en position et puissance de chaque outil ou unité de reprofilage. Les moyens de comparaison des profils mesurés et de référence ainsi que les moyens de sélection des configurations, position puissance, des outils sont dans l'exemple illustré regroupés dans le micro-processeur 23.

Dans le cas d'une machine telle que celle décrite, la mesure des ondes courtes et longues longitudinales de chaque rail peut permettre au micro-processeur 23 de déterminer des modes de reprofilage, léger ou agressif, suivant l'amplitude des ondulations, et libre ou bloqué, suivant la longueur d'ondes de ces ondulations. En mode agressif une surpuissance est ajoutée aux moteurs. En mode libre ou débloqué chaque unité de meulage est indépendante, pour le meulage des ondes courtes, tandis qu'en mode bloqué plusieurs unités de meulage sont rendues solidaires de manière à allonger la base de référence pour le meulage des ondes langues.

Le schéma selon la figure 10 est donné à titre indicatif, les asservissements de puissance, de position ou de vitesse pouvant être réalisés de façon différente sans passer par un convertisseur analogique-digital. De même, les moteurs électriques de meulage peuvent être remplacés par exemple par des moteurs hydrauliques.

Enfin, il faut également noter que lorsqu'à la fin d'un tronçon une autre configuration des outils de reprofilage est nécessaire pour le tronçon suivant, tant en position qu'en puissance, cela peut se faire de deux façons distinctes :

a. Tous les outils sont déplacés simultanément de leur ancienne position à la nouvelle.

b. Les outils disposés dans les sens de marche de la machine sont déplacés l'un après l'autre en fonction de leur espacement le long du rail et de la vitesse de travail, de façon à ce qu'ils prennent tous leur nouvelle position en un même point de la voie. Cela évite, pour des reprofileuses de grande longueur, de laisser des zones où le reprofilage du fait de l'espacement des outils serait indéterminé.

Bien que l'exemple décrit concerne un reprofilage de rails par meulage, il est évident que d'autres outils de reprofilage que des meules peuvent être utilisés tels que fraises, sabots oscillants, bande abrasive, etc.


## Revendications

1. Procédé de programmation du travail de reprofilage des rails d'une voie ferrée et/ou de reprofilage de ces rails, caractérisé par le fait qu'on découpe la voie en un certain nombre de tronçons et que pour chacun de ces tronçons on procède, pour chaque file de rails, aux opérations suivantes :

a. on sélectionne parmi plusieurs profils de référence un profil de référence préféré;

b. on détermine un certain nombre de types d'usure caractéristiques du rail à reprofiler parmi les types d'usure répertoriés;

c. on sélectionne le type de machine devant être utilisé pour le reprofilage parmi différents types de machine à disposition; ainsi que sa vitesse de travail;

d. on définit des configurations standard d'outils tant en position qu'en puissance;

e. on sélectionne, en fonction du type de machine à reprofiler devant être utilisé, les configurations standard d'outils pouvant être réalisées avec cette machine;

f. on mesure les longueurs et/ou les amplitudes des ondulations longitudinales sur le tronçon de voie envisagé;

g. on mesure le profil transversal du champignon du rail sur le tronçon de voie envisagé;

h. on compare le profil mesuré du rail avec le profil de référence préféré et détermine l'excès de métal à enlever;

i. on compare le profil transversal mesuré du rail aux différents types d'usure possibles et détermine par cette comparaison la catégorie de reprofilage à utiliser qui est représentative du tronçon considéré.

j. on détermine en fonction de la catégorie de reprofilage représentative la configuration standard d'outils particulière à utiliser parmi celles sélectionnées pour la machine à utiliser;

k. on détermine en fonction de la configuration d'outils particulière à utiliser, de la catégorie de reprofilage à utiliser, de l'excès de métal à enlever et de l'amplitude des ondulations longitudinales, le nombre de passes total à effectuer.

2. Procédé selon la revendication 1, caractérisé par le fait qu'on détermine en fonction des amplitudes et des longueurs d'ondes des ondulations longitudinales du rail au moins un mode de reprofilage léger ou agressif, et avec plusieurs unités de meulage bloquées ou libres.

3. Procédé selon la revendication 1 ou la revendication 2, caractérisé par le fait qu'on établit pour la voie à reprofiler un relevé des tronçons de voie, de la vitesse assignée à la machine de reprofilage pour chacun de ces tronçons, et du nombre de passe-machines pour chacun desdits tronçons de voie, puis qu'on utilise ce relevé pour la programmation, notamment en fonction des intervalles libres pour l'exécution des travaux de reprofilage des rails de cette voie.

4. Procédé selon la revendication 3, caractérisé par le fait qu'on affiche et/ou mémorise tous les autres paramètres déterminés ou mesurés en vue de la programmation du travail de reprofilage et/ou de la commande d'une machine de reprofilage en direct ou en différé.

5. Procédé selon l'une des revendications précédentes, caractérisé par le fait qu'on commande une machine de reprofilage soit directement soit à partir d'un enregistrement de la vitesse de travail, de la configuration standard d'outils à utiliser, du mode de reprofilage et du nombre de passe-machines total pour chaque tronçon de la voie.

6. Procédé selon l'une des revendications précédentes, caractérisé par le fait que le nombre des types d'usure de rail possible est de cinq; un rail pratiquement pas usé; un rail aplati dont les congés sont encore bons; un rail avec bavure extérieure marquée; un rail avec bavure extérieure et chanfrein intérieur; et un rail plat avec bavures extérieure et intérieure.

7. Procédé selon la revendication 3 ou la revendication 4, caractérisé par le fait qu'on utilise le protocole de l'enregistrement des paramètres relatifs au tronçon de voie pour la commande manuel le en temps différé d'une machine de reprofilage.

8. Procédé selon l'un des revendications précédentes, caractérisé par le fait que le changement de configuration d'outils est commandé soit simultanément pour tous les outils, soit séparement en fonction de l'avance de la machine pour que cette modification de configuration prenne effet pour tous les outils en un même point de la voie.

9. Machine pour la mise en oeuvre du procédé selon la revendication 1, caractérisé par le fait qu'elle comporte des moyens de sélection d'un profil de référence préféré parmi plusieurs profils de référence mémorisés; des moyens pour déterminer, parmi tous les types d'usure répertoriés et mémorisés, un certain nombre de types d'usure caractéristiques du rail à reprofiler; des moyens pour définir sa vitesse de travail; des moyens de mémorisation de toutes les configurations standard d'outils possibles pour cette machine; des moyens de mesure des longueurs et/ou des amplitudes des ondulations longitudinales des rails; des moyens de mesure du profil transversal du champignon du rail; des moyens de comparaison du profil du rail usé avec le profil de référence préféré pour déterminer l'excès de métal à enlever; des moyens de comparaison du profil transversal mesuré du rail aux différents types d'usure caractéristiques du rail à reprofiler pour déterminer la catégorie de reprofilage à utiliser; des moyens déterminant, en fonction de la catégorie de reprofilage à utiliser, la configuration standard d'outils particulière à utiliser; des moyens déterminant en fonction de la configuration d'outils à utiliser, de la catégorie de reprofilage à utiliser, de l'excès de métal à enlever et de l'amplitude des ondulations longitudinales, le nombre de passes total à effectuer.

10. Machine selon la revendication 9, caractérisée par le fait qu'elle comporte des moyens de commande de la configuration des outils relatifs à chaque file de rails provoquant soit une modification simultanée de la configuration de tous les outils, soit une modification séquentielle des outils relatifs à chaque file de rails en fonction de l'avancement de la machine le long de la voie.

**Patentansprüche**

1. Verfahren zum Programmieren der Reprofilierungsarbeiten an Schienen von Bahngeleisen und/oder zum Reprofilieren dieser Schienen, dadurch gekennzeichnet, dass die Geleise in eine Anzahl Abschnitte unterteilt werden und für jeden Geleiseabschnitt sowie für jede Schiene folgende Operationen durchgeführt werden:

a) man wählt unter mehreren Referenzprofilen das bevorzugte Profil aus;

b) man bestimmt eine Anzahl von charakteristischen Abnützungsformen des zu reprofilierenden Geleises unter aufgezeichneten Abnützungsformen;

c) man wählt den für die Reprofilierung zu benützenden Maschinentyp unter verschiedenen zur Verfügung stehenden Maschinentypen aus; so wie die Arbeitsgeschwindigkeit derselben;

d) man bestimmt die Standardkonfigurationen der Werkzeuge sowohl hinsichtlich ihrer Stellung als auch ihrer Leistung;

e) man wählt, in Abhängigkeit des zur Reprofilierung verwendeten Maschinentypes, die Standardkonfigurationen der Werkzeuge, die sich für diesen Maschinentyp eignen;

f) man misst die Längen und/oder die Amplituden der Längswelligkeit auf dem betreffenden Geleiseabschnitt;

g) man misst das Querprofil des Schienenkopfes auf dem betreffenden Geleiseabschnitt;

h) man vergleicht das ausgemessene Schienenprofil mit dem bevorzugten Referenzprofil und man bestimmt die zu entfernenden Metallüberschüsse;

i) man vergleicht das gemessene Querprofil der Schiene mit den verschiedenen möglichen Abnützungsformen, und man bestimmt durch diesen Vergleich die zu verwendende Reprofilierungskategorie, die für diesen Geleiseabschnitt repräsentativ ist;

j) man bestimmt, in Abhängigkeit der repräsentativen Reprofilierungskategorie, die Standardkonfiguration der besonderen hier zu verwendenden Werkzeuge unter den für diesen Maschinentyp ausgewählten Werkzeugen;

k) man bestimmt, in Abhängigkeit von der Konfiguration der zur Benutzung ausgewählten Werkzeuge, der zu verwendenden Reprofilierungskategorie, des zu entfernenden überschüssigen Metalls und der Amplitude der Längswellen, die Anzahl der durchzuführenden Durchgänge.

2. Verfahren nach Anspruch 1, dadurch gekennzeichnet, dass man in Abhängigkeit der Amplituden und der Wellenlänge der Längswelligkeit der Geleise mindestens eine Art der leichten oder der starken Reprofilierung bestimmt, mit mehreren freien oder blockierten Schleif-Einheiten.

3. Verfahren nach Anspruch 1 oder nach Anspruch 2, dadurch gekennzeichnet, dass man für das zu reprofilierende Geleise eine Liste der Geleiseabschnitte, der für die Reprofilierungsmaschine geeigneten Arbeitsgeschwindigkeit für jeden Geleiseabschnitt, sowie der Zahl der Maschinendurchgänge für jeden Gleisabschnitt erstellt und dass man diese Liste für die Programmierung verwendet, insbesondere in Abhängigkeit der freien Intervalle zur Durchführung der Reprofilierungsarbeiten der Schienen dieses Geleises.

4. Verfahren nach Anspruch 3, dadurch gekennzeichnet, dass man alle anderen bestimmten oder gemessenen Parameter im Hinblick auf die Programmierung der Reprofilierungsarbeit und/oder die Steuerung einer Reprofilierungsmaschine sofort oder aufgeschoben anzeigt oder speichert.

5. Verfahren nach einem der vorangehenden Ansprüche, dadurch gekennzeichnet, dass man eine Reprofilierungsmaschine direkt oder ausgehend von der Registrierung der Arbeitsgeschwindigkeit, der Standardkonfiguration der zu verwendenden Werkzeuge, der Art der Reprofilierung und der Zahl der Maschinendurchgänge für jeden Geleiseabschnitt steuert.

6. Verfahren nach einem der vorangehenden Ansprüche, dadurch gekennzeichnet, dass die Zahl der möglichen Schienen-Abnützungsformen gleich fünf ist, nämlich eine praktisch nicht abgenützte Schiene; eine abgeflachte Schiene, deren Kanten noch gut sind; eine Schiene mit markiertem, äusserem Grat; eine Schiene mit äusserem Grat und innerer Abschrägung und eine flache Schiene mit äusseren und inneren Gräten.

7. Verfahren nach Anspruch 3 oder nach Anspruch 4, dadurch gekennzeichnet, dass man das Protokoll der Registrierung der Parameter des entsprechenden Geleiseabschnittes zur späteren manuellen Steuerung einer Reprofilierungsmaschine verwendet.

8. Verfahren nach einem der vorangehenden Ansprüche, dadurch gekennzeichnet, dass die Aenderung der verwendeten Werkzeugkonfiguration entweder gleichzeitig für alle Werkzeuge oder einzeln in Abhängigkeit des Maschinenvorschubes gesteuert wird, damit die Aenderung der Werkzeugkonfiguration für alle Werkzeuge an derselben Stelle der Schiene wirksam wird.

9. Maschine zur Durchführung des Verfahrens gemäss Anspruch 1, dadurch gekennzeichnet, dass sie Mittel zur Auswahl eines bevorzugten Referenzprofiles unter einer Anzahl von gespeicherten Referenzprofilen; Mittel zur Auswahl unter vielen Abnützungsformen, die aufgezeichnet und gespeichert sind, einer gewissen Anzahl von Abnützungsformen, welche für die zu reprofilierenden Schienen kennzeichnend sind; Mittel zur Bestimmung der Arbeitsgeschwindigkeit; Mittel zur Speicherung aller Standardkonfigurationen der für die Maschinen möglichen Werkzeuge; Mittel zum Messen der Längen und/oder Amplituden der Längswelligkeit der Schiene; Mittel zum Messen des Querprofiles am Schienenkopf; Mittel zum Vergleichen des abgenützten Schienenprofiles mit dem bevorzugten Referenzprofil zur Bestimmung des zu entfernenden, überschüssigen Metalles; Mittel zum Vergleichen des gemessenen Querprofiles der Schiene mit verschiedenen Abnützungsformen'entsprechend der zu reprofilierenden Schiene zur Bestimmung der zu verwendenden Reprofilierungskategorie; Mittel, welche in Abhängigkeit der zu verwendenden Reprofilierungskategorie die Standardkonfiguration der besonderen zu verwendenden Werkzeuge bestimmen; und Mittel, welche in Abhängigkeit der zu verwendenden Werkzeugkonfiguration, der Art der zu verwendenen Reprofilierungkategorie, des zu entfernenden überschüssigen Metalls und der Amplitude der Längswelligkeit die gesamte Anzahl der erforderlichen Maschinendurchgänge bestimmen, aufweist.

10. Maschine nach Anspruch 9, dadurch gekennzeichnet, dass die Maschine Steuermittel aufweist für die Wahl der Werkzeugkonfiguration entsprechend jedes Schienenstranges, welche eine gleichzeitige Aenderung der Werkzeugkonfiguration aller Werkzeuge oder eine sequentielle Aenderung der Werkzeuge bezüglich jedes Schienenstranges in Abhängigkeit des Maschinenvorschubes entlang des Geleises erzeugen.

## Claims

1. Programmation method of the reprofiling work of the rails of a railroad track and/or of reprofiling of these rails, characterized in that the track is devided in a certain number of portions and that for each of said portions one proceeds for each line of rails, to the following operations :
   a. selecting among several reference profiles a preferred reference profile;
   b. determining a certain number of characteristical wearing off types of the rail to be reprofiled among given wearing off types.
   c. selecting the type of machine having to be used for the reprofiling among the types of machine at disposition, as well as the speed of working;
   d. defining the standard tool configurations as well in position as in power;
   e. selecting in function of the type of reprofiling machine to be used, the standard tool configurations which can be realized with said machine;
   f. measuring the length and/or the amplitude of the longitudinal undulations on the track portion envisaged;
   g. measuring the transversal profile of the head of the rail on the envisaged track portion;
   h. comparing the measured rail profile with the preferred reference profile and determining the excess of metal to be removed;
   i. comparing the measured transversal profile of the rail to the different possible wearing off types and determining by this comparison the reprofiling category to be used which is representative for the considered portion.

j. determining in function of the representative reprofiling category the standard particular tool configuration to be used among the ones selected for the machine to be used;

k. determining in function of the particular tool configuration to be used, of the reprofiling category to be used, of the excess metal to be removed and of the longitudinal undulations amplitude the total number of passes to be made.

2. A method according to claim 1, characterized by determining, in function of the amplitudes and of the wavelengths of the longitudinal undulations of the rail, at least one reprofiling mode a light one or an agressive one, and with several grinding unit locked or free.

3. A method according to claim 1 or to claim 2, characterized in that one establishes for the track to be reprofiled a record of the track portions, of the speed assigned to the reprofiling machine for each of these portions, and of the number of machine passes for each of the said track portions, then using this record for the programming, in function of the free intervals for making the work of reprofiling the rails of this track.

4. A method according to claim 3, characterized in that one displays and/or memorizes all the other parameters determined or measured for the programming of the reprofiling work and/or for the control of a reprofiling machine directly or in a differed manner.

5. A method according to one of the preceeding claims, characterized in that one controls a reprofiling machine either directly or by means of a record of the speed of work, of the standard tool configuration to be used, of the reprofiling mode and of the total number of machine passes for each portion of the track.

6. A method according to one of the preceeding claims, characterized in that the number of possible wearing off types of the rail is of five; a rail practically not worn; a flattened rail the sides of which are still good; a rail with an important outside burr, a rail with an outside burr and an inside chamfer; and a flat rail having outside and inside burrs.

7. A method according to claim 3 or to claim 4, characterized in that one uses the protocol of the record of the parameters relative to the track portion for the manual control in differed time of a reprofiling machine.

8. A method according to one of the preceeding claims, characterized in that the change in tool configuration is controled either simultaneously for all the tools or separately in function of the advance of the machine so that this modification of configuration will take effect for all the tools at a same point of the track.

9. A machine for performing the method according to claim 1, characterized by comprising selection means of a preferred reference profile among several reference profiles which are memorized; means to determine among all the memorized and detected types of wearing off a certain number of characteristic wearing off types of the rail to be reprofiled; means to define the speed of work; means to memorize all the possible standard configurations of tools for this machine; means to measure the length and/or the amplitude of the longitudinal undulations of the rails; means to measure the transversal profile of the head of the rail; comparison means of the worn rail profile with the preferred reference profile to determine the excess metal to be removed; comparison means of the measured transversal profile to the different characteristic wearing off types of the rail to be reprofiled to determine the reprofiling category to be used; means determining in function of the reprofiling category to be used, the particular standard tool configuration to be used; means determining in function of the tool configuration to be used, of the reprofiling category to be used, of the excess of metal to be removed and of the amplitude of the longitudinal undulations, the total number of passes to be made.

10. A machine according to claim 9, characterized in that it comprises control means of the tool configuration relative to each line of rails causing either a simultaneous modification of the configuration of all tools or a sequential modification of the tools relative to each line of rails in function of the advance of the machine along the track.

## FIG. 1

# FIG. 2

USURE

CAT.

a — 1

b — 2 (E)

c — 3 (E)

d — 4 (E)

e — 5 (E)

FIG. 3a

EP 0 417 452 B1

# FIG. 3b

PK: 102.500 à 102.550          Lo = 50 m.

RAIL GAUCHE                    RAIL DROITE

| RAIL GAUCHE | | RAIL DROITE |
|---|---|---|
| 3 | CATEGORIE | 5 |
| 36 | DISTRIBUTION N° | 58 |
| 30 | INTENSITES N° | 51 |
| 0,32 | AMPLITUDE OC | 0,37 |
| 1,18 | AMPLITUDE OL | 1,24 |
| AGRESSIF | MODE DE MEULAGE | AGRESSIF |
| BLOQUÉ | | BLOQUÉ |

# FIG. 4

FIG. 5

FIG. 6

FIG. 7

FIG. 8

FIG. 9

FIG. 10